# EUROPEAN PATENT SPECIFICATION

(11) **EP 2 746 810 B1**
(45) Date of publication and mention of the grant of the patent: **10.06.2020**
(21) Application number: 12008471.0
(22) Date of filing: 20.12.2012
(51) Int. Cl.: G01S 19/05, G01S 19/25

(54) **System for assisted secured navigation with a GNSS**
System für unterstützte abgesicherte Navigation mit einem GNSS
Système de navigation sécurisée assistée avec un GNSS

(43) Date of publication of application: 25.06.2014
(73) Proprietor: Airbus Defence and Space GmbH, 82024 Taufkirchen (DE)
(72) Inventor: Wendel, Jan, D-81373 München (DE); Kogler, Wolfgang, D-85521 Ottobrunn (DE)
(74) Representative: Frenkel, Matthias Alexander

(56) References cited:
- WO-A2-2010/105136
- US-A- 5 952 960
- Wilayat Khan ET AL: "Authentication and Secure Communication in GSM, GPRS, and UMTS Using Asymmetric Cryptography", International Journal of Computer Science Issues (IJCSI), 1 May 2010 (2010-05-01), pages 10-16, XP055587506, Mahebourg Retrieved from the Internet: URL:https://www.ijcsi.org/papers/7-3-9-10- 16.pdf [retrieved on 2019-05-10]

## Description

### TECHNICAL FIELD

The invention relates to a system for assisted secured navigation with a GNSS.

### BACKGROUND

Assisted navigation serves to improve the performance of a GNSS (Global Navigation Satellite System) based positioning system. While standalone GNSS based positioning or navigation devices only use radio signals from GNSS satellites, assisted navigation devices also use network resources for improving the positioning performance. For (NAVSTAR-) GPS, the Assisted-GPS (A-GPS) system was introduced to improve the performance of GPS-based positioning. A-GPS is a well-known and established method for improving the performance of GPS receivers by providing information via a communication link to the GPS receiver.

This method is often used with the GPS chips integrated in mobile phones, as for this application the communication link is already available. The information provided to the receiver by an assistance server consists e.g. of a coarse position derived from mobile phone cell ID or other means, Almanach and / or Ephemeris data, and time information. With this information, the receiver can calculate which satellites could be visible, and restrict the acquisition process to these visible satellites.

Furthermore, from coarse receiver position, time, and satellite orbit information from Almanach or Ephemeris, the receiver can calculate the expected satellite signal Doppler frequency, and therefore narrow the frequency search space in the acquisition process. This leads to a significant reduction in time-to-first-fix (TTFF), or alternatively, with the same computational complexity the correlation times per frequency bin can be increased compared to the unaided case, providing a higher sensitivity in the acquisition.

However, further benefits can be achieved; for example by providing the complete navigation message to the receiver, the need for message demodulation is overcome, which allows to use satellite signals for positioning where such a demodulation would not be possible due to a low carrier-to-noise density ratio.

In the European GNSS Galileo, a Galileo Public Regulated Service (PRS) will be provided, which is restricted to government-authorised users, and will be used for sensitive applications which require a high level of service continuity. Currently, the development of an assisted Galileo PRS service is under discussion. In principle, an assisted PRS provides the same advantages as A-GPS, like reduced TTFF etc. However, the Galileo PRS service uses encrypted ranging codes and messages in order to control the access to this service: Without valid keys needed for decryption, it is not possible to track the PRS signals and to derive a position fix. The decryption of the PRS messages and the generation of the ranging codes are done in the Security Module of the PRS receiver, which is a major driver for cost and power consumption.

The receiver manufacturer u-blox AG, Zürich, Switzerland, offers a technology called "Capture & Process". Hereby, the receiver acquires 200ms of raw GPS baseband or IF samples, which are processed later on a PC to generate a position fix. The required additional information like Ephemeris data is provided by a server via the internet.

The US patent US5952960A discloses a delayed correlation receiver for delay-processing the encrypted satellite signals. A central station is designed to receive encoded satellite signals using a high gain antenna. The central station extracts the encrypted satellite information and transmits it to the delayed correlation receiver. The delayed correlation receiver receives the encrypted satellite information using the standard satellite antenna and performs the full correlation with the encrypted information received from the central station without requiring the secret encryption keys.

The international patent application WO2010/105136A2 describes a system and a method for detecting spoofing of signals by processing intermittent bursts of encrypted Global Navigation Satellite System (GNSS) signals in order to determine whether unencrypted signals are being spoofed.

### SUMMARY OF INVENTION

It is an object of the invention to provide an improved system for assisted secured navigation with a GNSS.

This object is achieved by the subject matter of the independent claims. Further embodiments are shown by the dependent claims.

The present invention is based on the following basic thoughts: extending the before mentioned idea of "Capture & Process", an assisted PRS architecture for assisted secured navigation could be established where the PRS receiver captures baseband samples, transfers them to an assistance server which calculates a position fix, and transfers this position fix back to the PRS receiver. The processing of the PRS messages and generation of ranging code replicas for correlation with the baseband samples would only take place in the assistance server; the PRS receiver would not need to have a security module, would not need to decode PRS messages, and would not need to generate ranging codes. The access control to the PRS service could be enforced via the communication link, e.g. TETRA provides authentication mechanisms and an unambiguous identification of each terminal by a PIN code which could be used for this purpose. However, the major drawbacks of such an extended Capture & Process approach are the huge amount of data that needs to be transferred from the receiver to the assistance server, and the fact that the amount of data to be transferred and the required processing power at the assistance server grows proportional with the number of receivers that shall be served. Therefore, the present invention proposes to provide ranging code chips of an encrypted GNSS service via communication links from one or more assistance servers so that receivers of encrypted GNSS service signals are able to process these encrypted signals by means of the provided ranging code chips, which allow to correlate a received encrypted GNSS service signal without requiring any security means as for example required for receiving and processing Galileo PRS signals. Compared to an extended capture and process approach as described above, the amount of data to be transferred via a network is significantly smaller: The ranging code chips have a much lower data rate than the baseband or IF samples. The replicas for correlation with the received signal are generated in the receiver. Furthermore, several receivers could listen to a broadcast of ranging code chips from an assistance server, so the amount of data to be transferred via the network does not necessarily increase with the number of receivers that are served by one assistance server.

An embodiment of the invention relates to a system for assisted secured navigation with an encrypted GNSS service and is defined by independent claim 1.

Specific details of this embodiment are defined by dependent claims 2 to 5.

A further embodiment of the invention relates to a GNSS assistance server for use with a system of the invention and is defined by independent claim 6.

Specific details of this further embodiment are defined by dependent claim 7.

Another embodiment of the invention relates to a GNSS receiver for assisted secured navigation with a system of the invention and is defined by independent claim 8.

Specific details of this another embodiment are defined by dependent claim 9.

A yet further embodiment of the invention relates to a method for receiving ranging code chips of an encrypted GNSS service provided by a system of the invention and is defined by independent claim 10.

A further embodiment of the invention relates to a computer program, which implements the method according to the invention and is defined by independent claim 11.

According to a further embodiment of the invention, a record carrier storing a computer program according to the invention is defined by claim 12.

These and other aspects of the invention will be apparent from and elucidated with reference to the embodiments described hereinafter.

The invention will be described in more detail hereinafter with reference to exemplary embodiments. However, the invention is not limited to these exemplary embodiments.

### BRIEF DESCRIPTION OF DRAWINGS

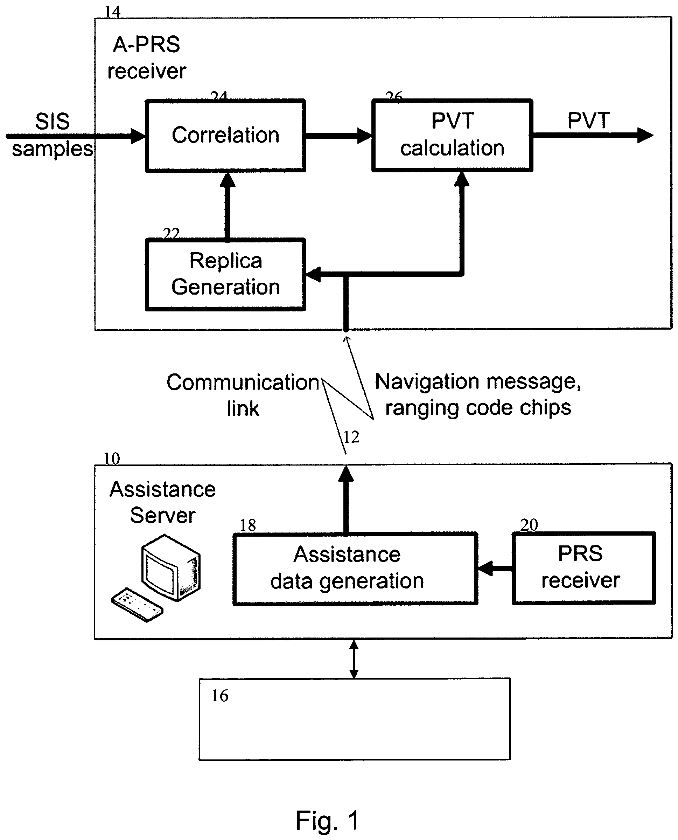

- Fig. 1: shows an embodiment of a block diagram of an architecture for an assisted PRS with an A-PRS receiver and an assistance server according to the invention.

### DESCRIPTION OF EMBODIMENTS

In the following, functionally similar or identical elements may have the same reference numerals. Furthermore, the following embodiment of the invention is described for the case of Galileo PRS, but it should be noted that the invention can be applied to any secured navigation signals and services which use message and / or ranging code encryption.

Fig. 1 shows an architecture for an assisted PRS, where one or more assistance servers 10 provide via communication links 12 PRS ranging code chips to one or more A-PRS receivers 14.

The A-PRS receiver 14 is able to receive a SIS (Signal-in-Space) from a GNSS satellite, wherein the SIS may comprise data of an encrypted GNSS service such as the Galileo PRS. The A-PRS receiver 14 is not equipped with the security means to decrypt the encrypted PRS service by itself, i.e. without the ranging code chips from the assistance server 10.

The assistance server 10 comprises a PRS receiver 20, equipped with a full-blown security module and appropriately keyed, or any other means, so that the receiver 20 can receive the encrypted GNSS service and decrypt the information transmitted by the service. From the decrypted GNSS service information, an assistance data generation 18 of the server 10 generates ranging code chips suited to be used for generating replicas for correlation with samples of a received encrypted GNSS service signal, i.e. with SIS samples of this signal. By using these replicas for correlation, no further decryption is required in the A-PRS receiver.

The ranging code chips generated by the assistance data generation unit 18 can be valid, in an example useful for understanding the invention, for a defined time interval in the past, at which the A-PRS receiver 14 has acquired baseband or IF samples of the SIS, or, according to an embodiment of the invention, for a defined time interval in the future, where the PRS receiver will acquire baseband or IF samples of the SIS. The ranging code chips can be transmitted over the communication link 12 with a time stamp defining their validity. The number of ranging code chips must be sufficient to allow for the generation of replicas for correlation with the received signal.

The communication link 12 can be encrypted so that only A-PRS receivers 14 can receive the ranging code chips transmitted with the communication link 12, which are able and allowed to decrypt it.

The transmission of ranging code chips via the communication link 12 can be performed in a broadcasting manner, i.e. via a point-to-multipoint communication. For example, the assistance server 10 can be configured to transmit ranging code chips with a broadcast message via the communication link 12 so that the receipt of the ranging code chips is not restricted to one A-PRS receiver.

The communication link 12 may be a wired and/or wireless communication link and also use standard transmission protocols such as TCP/IP. Particularly, it may be a mobile communication link such as used by mobile devices with internet access such as mobile phones or smartphone using UMTS, GPRS, HSDPA so that such a mobile device containing the A-PRS receiver 14 is able to receive and use the PRS.

The assistance server 10 may be an industry standard server accessible via a standard network protocol, particularly TCP/IP. In order to enable a broad and easy access, the assistance server 10 may be connected to the internet and accessible via an URL in the internet from any device

In order to only grant access for authorized users, the assistance server 10 may communicate with an authentication and/or identification system server 16, which authorizes A-PRS receivers 14 for access to and receipt of ranging code chips from the assistance server 10. The access control to the service of the assistance server 10 could be also enforced via the authentication and identification capabilities of the communication link 12, e.g. like offered by the Professional Mobile Radios (PMR) TETRA and TETRAPOL.

Using the ranging code chips provided via the communication link 12, which is either encrypted or unencrypted, the A-PRS receiver 14 can generate with a replica generation unit 22 code replicas and can correlate these replicas with the acquired baseband or IF samples of the SIS transmitting the PRS by means of a correlation unit 24.

The information contained in the navigation messages like Ephemeris etc, which are required by the receiver to calculate a position fix, are either provided by the communication link 12, too, or have been stored in the receiver 14 before.

With the replicas generated from the ranging code chips and the navigation message information, a PVT (Position, Velocity, Time) unit 26 of the receiver 14 is able to calculate a position fix without requiring a security module, handling PRS messages, or PRS keys.

In the following, some advantages of the present invention with regard to the above described embodiment are briefly summarized:
- The A-PRS receiver 14 does not need to have a security module, no processing of PRS messages is required, and no PRS keys must be available in the receiver. This leads to a low complexity, low power consumption, longer battery life, and cost reduction for the receiver. Furthermore, security issues related to the receiver are avoided.
- Compared to a capture and process approach, the amount of data to be transferred via the network is significantly smaller: The ranging code chips have a much lower data rate than the baseband or IF samples. The replicas for correlation with the received signal are generated in the receiver. Furthermore, several receivers could listen to a broadcast of ranging code chips from the assistance server, so the amount of data to be transferred via the network does not necessarily increase with the number of receivers that are served by one assistance server.

### REFERENCE NUMERALS

- 10: Assistance server
- 12: Communication link for transmitting ranging code chips and navigation messages
- 14: A-PRS receiver
- 16: Authentication and/or identification system server
- 18: Assistance data generation unit
- 20: PRS receiver
- 22: Replica generation unit
- 24: Correlation unit
- 26: PVT calculation unit

## Claims

1. A system for assisted secured navigation with an encrypted Global Navigation Satellite System, GNSS, service, the system comprising one or more assistance servers (10) being configured to provide via communication links (12) ranging code chips of the encrypted GNSS service together with a time stamp defining their validity to one or more receivers (14) of the encrypted GNSS service, wherein the provided ranging code chips are valid for a defined time interval in the future, wherein the number of ranging code chips is sufficient to allow for the generation of replicas for correlation with a received signal of the encrypted GNSS service.

2. The system of claim 1, further comprising an authentication and/or identification system (16), wherein the authentication and/or identification system (16) is adapted to control access to the provided ranging code chips of the encrypted GNSS service.

3. The system of claim 1 or 2, wherein one or more of the communication links (12) for providing ranging code chips of the encrypted GNSS service to one or more receivers (14) of the encrypted GNSS service is secured by an encryption.

4. The system of any of the preceding claims, wherein the encrypted GNSS service is a GNSS service with secured navigation signals and/or services, which uses message and/or ranging code encryption.

5. The system of any of the preceding claims, wherein the GNSS is Galileo and the encrypted GNSS service is the Galileo Public Regulated Service.

6. A GNSS assistance server (10) for use with a system of any of the preceding claims, comprising
- an assistance data generation unit (18) configured for providing ranging code chips of an encrypted GNSS service via a communication link (12) together with a time stamp defining their validity to one or more receivers (14) of the encrypted GNSS service, wherein the provided ranging code chips are valid for a defined time interval in the future, wherein the number of ranging code chips is sufficient to allow for the generation of replicas for correlation with a received signal of the encrypted GNSS service.

7. The GNSS assistance server of claim 6 further comprising a receiver (20) being adapted to receive and decrypt signals of the encrypted GNSS service.

8. A GNSS receiver (14) for assisted secured navigation with a system of any of the claims 1 to 6 comprising
- a receiving unit configured for receiving ranging code chips via communication links (12) from an assistance server (10) of claim 6 or 7, wherein the ranging code chips are provided by the assistance server (10) and are valid for a defined time interval in the future, which validity is defined by a time stamp provided by the assistance server (10),
- a replica generation unit (22) configured for generating replicas from the received ranging code chips, , wherein the replicas are suited for correlation with a received encrypted GNSS service signal,
- a correlation unit (24) configured for correlating the received encrypted GNSS service signal with the generated replicas and outputting a decrypted GNSS service signal, and
- a calculation unit (26) configured for calculating a position, a velocity and/or a time from the decrypted GNSS service signal.

9. The GNSS receiver of claim 8, being further adapted to decrypt the ranging code chips provided via encrypted communication links from one or more assistance servers of the system of claim 3.

10. A method for receiving ranging code chips of an encrypted GNSS service provided by a system of any of the claims 1 to 5, the method comprising receiving the ranging code chips via communication links (12) from an assistance server (10) of claim 6 or 7, wherein the received ranging code chips are valid for a defined time interval in the future, which validity is defined by a time stamp provided by the assistance server (10), and generating replicas from the received ranging code chips, wherein the replicas are suited for correlation with a received encrypted GNSS service signal, and providing the generated replicas for correlating the received encrypted GNSS service signal with the provided replicas.

11. A computer program comprising instructions which, when the program is executed by a GNSS receiver of claim 8 or 9, cause the GNSS receiver to carry out the method according to claim 10.

12. A record carrier having stored theron a computer program according to claim 11.

## Patentansprüche

1. System für unterstützte abgesicherte Navigation mit einem verschlüsselten globalen Navigationssatellitensystem, GNSS,-Dienst, das System umfassend einen oder mehrere Unterstützungsserver (10), die konfiguriert sind, um Entfernungsbestimmungscodechips des verschlüsselten GNSS-Dienstes zusammen mit einem Zeitstempel, der ihre Gültigkeit definiert, über Kommunikationsverbindungen (12) an einen oder mehrere Empfänger (14) des verschlüsselten GNSS-Dienstes bereitzustellen, wobei die bereitgestellten Entfernungsbestimmungscodechips für einen definierten Zeitraum in der Zukunft gültig sind, wobei die Zahl der Entfernungsbestimmungscodechips ausreichend ist, um die Erzeugung von Replikaten zur Korrelation mit einem empfangenen Signal des verschlüsselten GNSS-Dienstes zu ermöglichen.

2. System nach Anspruch 1, ferner umfassend ein Authentifizierungs- und/oder Identifizierungssystem (16), wobei das Authentifizierungs- und/oder Identifizierungssystem (16) geeignet ist, um den Zugriff auf die bereitgestellten Entfernungsbestimmungscodechips des verschlüsselten GNSS-Dienstes zu steuern.

3. System nach Anspruch 1 oder 2, wobei eine oder mehrere der Kommunikationsverbindungen (12) zum Bereitstellen von Entfernungsbestimmungscodechips des verschlüsselten GNSS-Dienstes an einen oder mehrere Empfänger (14) des verschlüsselten GNSS-Dienstes durch eine Verschlüsselung abgesichert sind.

4. System nach einem der vorhergehenden Ansprüche, wobei der verschlüsselte GNSS-Dienst ein GNSS-Dienst mit abgesicherten Navigationssignalen und/oder - diensten ist, der Mitteilungen und/oder Entfernungsbestimmungscodechips verwendet.

5. System nach einem der vorhergehenden Ansprüche, wobei das GNSS Galileo ist und der verschlüsselte GNSS-Dienst der öffentlich regulierte Dienst von Galileo ist.

6. GNSS-Unterstützungsserver (10) zur Verwendung mit einem System nach einem der vorhergehenden Ansprüche, umfassend
- eine Unterstützungsdatenerzeugungseinheit (18), die zum Bereitstellen von Entfernungsbestimmungscodechips eines verschlüsselten GNSS-Dienstes über eine Kommunikationsverbindung (12) zusammen mit einem Zeitstempel, der ihre Gültigkeit definiert, an einen oder mehrere Empfänger (14) des verschlüsselten GNSS-Dienstes konfiguriert ist, wobei die bereitgestellten Entfernungsbestimmungscodechips für einen definierten Zeitraum in der Zukunft gültig sind, wobei die Zahl der Entfernungsbestimmungscodechips ausreichend ist, um die Erzeugung von Replikaten zur Korrelation mit einem empfangenen Signal des verschlüsselten GNSS-Dienstes zu ermöglichen.

7. GNSS-Unterstützungsserver nach Anspruch 6, ferner umfassend einen Empfänger (20), der geeignet ist, um Signale des verschlüsselten GNSS-Dienstes zu empfangen und zu entschlüsseln.

8. GNSS-Empfänger (14) für eine unterstützte abgesicherte Navigation mit einem System nach einem der Ansprüche 1 bis 6, umfassend
- eine Empfangseinheit, die zum Empfangen von Entfernungsbestimmungscodechips über Kommunikationsverbindungen (12) von einem Unterstützungsserver (10) nach Anspruch 6 oder 7 konfiguriert ist, wobei die Entfernungsbestimmungscodechips von dem Unterstützungsserver (10) bereitgestellt werden und für einen definierten Zeitraum in der Zukunft gültig sind, dessen Gültigkeit durch einen Zeitstempel definiert ist, der von dem Unterstützungsserver (10) bereitgestellt wird,
- eine Replikaten-Erzeugungseinheit (22), die zum Erzeugen von Replikaten aus den empfangenen Entfernungsbestimmungscodechips konfiguriert ist, wobei die Replikate für eine Korrelation mit einem empfangenen verschlüsselten GNSS-Dienstsignal geeignet sind,
- eine Korrelationseinheit (24), die zum Korrelieren des empfangenen verschlüsselten GNSS-Dienstsignals mit den erzeugten Replikaten und zum Ausgeben eines entschlüsselten GNSS-Dienstsignals konfiguriert ist, und
- eine Berechnungseinheit (26), die zum Berechnen einer Position, einer Geschwindigkeit und/oder einer Zeit aus einem entschlüsselten GNSS-Dienstsignals konfiguriert ist.

9. GNSS-Empfänger nach Anspruch 8, der ferner geeignet ist, um die Entfernungsbestimmungscodechips zu entschlüsseln, die über verschlüsselte Kommunikationsverbindungen von einem oder mehreren Unterstützungsservers des Systems nach Anspruch 3 bereitgestellt werden.

10. Verfahren zum Empfangen von Entfernungsbestimmungscodechips eines verschlüsselten GNSS-Dienstes, der von einem System nach einem der Ansprüche 1 bis 5 bereitgestellt wird, wobei das Verfahren das Empfangen der Entfernungsbestimmungscodechips über Kommunikationsverbindungen (12) von einem Unterstützungsserver (10) nach Anspruch 6 oder 7, wobei die empfangenen Entfernungsbestimmungscodechips für einen definierten Zeitraum in der Zukunft gültig sind, dessen Gültigkeit durch einen Zeitstempel definiert ist, der von dem Unterstützungsserver (10) bereitgestellt wird, und das Erzeugen von Replikaten aus den empfangenen Entfernungsbestimmungscodechips, wobei die Replikate für eine Korrelation mit einem empfangenen verschlüsselten GNSS-Dienstsignal geeignet sind, und das Bereitstellen der erzeugten Replikate zum Korrelieren des empfangenen verschlüsselten GNSS-Dienstsignals mit den bereitgestellten Replikaten umfasst.

11. Computerprogramm, das Befehle umfasst, die, wenn das Programm von einem GNSS-Empfänger nach Anspruch 8 oder 9 ausgeführt wird, bewirken, dass der GNSS-Empfänger das Verfahren nach Anspruch 10 ausführt.

12. Datenträger, auf dem ein Computerprogramm nach Anspruch 11 gespeichert ist.

## Revendications

1. Système de navigation sécurisée assistée avec un service crypté de système mondial de navigation par satellite, GNSS, le système comprenant un ou plusieurs serveurs d'assistance (10) étant configurés pour fournir par l'intermédiaire de liaisons de communication (12) des puces de code de télémétrie du service GNSS crypté conjointement avec un horodatage définissant leur validité pour un ou plusieurs récepteurs (14) du service GNSS crypté, dans lequel les puces de code de télémétrie fournies sont valides pendant un intervalle de temps défini à l'avenir, dans lequel le nombre de puces de code de télémétrie est suffisant pour permettre la génération de répliques pour une corrélation avec un signal reçu du service GNSS crypté.

2. Système selon la revendication 1, comprenant en outre un système d'authentification et/ou d'identification (16), dans lequel le système d'authentification et/ou d'identification (16) est conçu pour commander l'accès aux puces de code de télémétrie fournies du service GNSS crypté.

3. Système selon la revendication 1 ou 2, dans lequel une ou plusieurs des liaisons de communication (12) pour fournir des puces de code de télémétrie du service GNSS crypté à un ou plusieurs récepteurs (14) du service GNSS crypté sont sécurisées par un cryptage.

4. Système selon l'une quelconque des revendications précédentes, dans lequel le service GNSS crypté est un service GNSS avec des signaux et/ou services de navigation sécurisés, qui utilise un cryptage de message et/ou de code de télémétrie.

5. Système selon l'une quelconque des revendications précédentes, dans lequel le GNSS est Galileo et le service GNSS crypté est le service public réglementé Galileo.

6. Serveur d'assistance GNSS (10) destiné à être utilisé avec un système selon l'une quelconque des revendications précédentes, comprenant
- une unité de génération de données d'assistance (18) configurée pour fournir des puces de code de télémétrie d'un service GNSS crypté par l'intermédiaire d'une liaison de communication (12) conjointement avec un horodatage définissant leur validité pour un ou plusieurs récepteurs (14) du service GNSS crypté, dans lequel les puces de code de télémétrie fournies sont valides pendant un intervalle de temps défini à l'avenir, dans lequel le nombre de puces de code de télémétrie est suffisant pour permettre la génération de répliques pour une corrélation avec un signal reçu du service GNSS crypté.

7. Serveur d'assistance GNSS selon la revendication 6, comprenant en outre un récepteur (20) étant conçu pour recevoir et décrypter des signaux du service GNSS crypté.

8. Récepteur GNSS (14) pour une navigation sécurisée assistée avec un système selon l'une quelconque des revendications 1 à 6, comprenant
- une unité de réception configurée pour recevoir des puces de code de télémétrie par l'intermédiaire de liaisons de communication (12) d'un serveur d'assistance (10) selon la revendication 6 ou 7, dans lequel les puces de code de télémétrie sont fournies par le serveur d'assistance (10) et sont valides pendant un intervalle de temps défini à l'avenir, laquelle validité est définie par un horodatage fourni par le serveur d'assistance (10),
- une unité de génération de réplique (22) configurée pour générer des répliques à partir des puces de code de télémétrie reçues, dans lequel les répliques sont adaptées pour une corrélation avec un signal de service GNSS crypté reçu,
- une unité de corrélation (24) configurée pour corréler le signal de service GNSS crypté reçu avec les répliques générées et délivrer un signal de service GNSS décrypté, et
- une unité de calcul (26) configurée pour calculer une position, une vitesse et/ou un temps à partir du signal de service GNSS décrypté.

9. Récepteur GNSS selon la revendication 8, étant en outre conçu pour décrypter les puces de code de télémétrie fournies par l'intermédiaire de liaisons de communication cryptées à partir d'un ou de plusieurs serveurs d'assistance du système selon la revendication 3.

10. Procédé pour recevoir des puces de code de télémétrie d'un service GNSS crypté fourni par un système selon l'une quelconque des revendications 1 à 5, le procédé comprenant la réception des puces de code de télémétrie par l'intermédiaire de liaisons de communication (12) à partir d'un serveur d'assistance (10) selon la revendication 6 ou 7, dans lequel les puces de code de télémétrie reçues sont valides pendant un intervalle de temps défini dans le futur, laquelle validité est définie par un horodatage fourni par le serveur d'assistance (10), et la génération de répliques à partir des puces de code de télémétrie reçues, dans lequel les répliques sont adaptées pour une corrélation avec un signal de service GNSS crypté reçu, et la fourniture des répliques générées pour corréler le signal de service GNSS crypté reçu avec les répliques fournies.

11. Programme informatique comprenant des instructions qui, lorsque le programme est exécuté par un récepteur GNSS selon la revendication 8 ou 9, amènent le récepteur GNSS à mettre en œuvre le procédé selon la revendication 10.

12. Support d'enregistrement sur lequel est stocké un programme informatique selon la revendication 11.
